# EUROPEAN PATENT APPLICATION

(11) **EP 1 176 070 A2**
(43) Date of publication of application: **30.01.2002**
(21) Application number: 01306478.7
(22) Date of filing: 27.07.2001
(51) Int. Cl.: B60S 1/38

(54) **Windscreen wiper end-cap**

(30) Priority: 28.07.2000 GB 0018456
(71) Applicant: Trico Products Corporation, Rochester Hills, MI 48309 (US)
(72) Inventor: Robertson, Alistair Duncan, Aberdare, Mid Glamorgan CF44 6RP (GB)
(74) Representative: James, Michael John Gwynne

(57) **Abstract**

An internal tongue 10 of an end-cap 5 locates as a snap-fit into an opening 11 cut into the top of a vertebra 1, so that the end-cap 5 does not slide off. The top wall 12 of the end-cap 5 is partially cut away by slots 13 and 14. This top wall portion 12 is then held only adjacent to the other side wall 7 and can flex upwardly so that the top wall portion 12 can be prised upwardly to release the tongue 10 from the recess 11, to enable the end-cap 5 to be removed.

## Description

It is known to provide a profiled vertebra for a windscreen wiper assembly, which will locate and support the head of a profiled wiper rubber. An end-cap is often located onto the end of this vertebra to prevent the wiper rubber from sliding out. However problems are faced when trying to remove the end-cap, such as to replace the wiper rubber when it is worn or for one which is of a different design.

According to the present invention there is provided a profiled vertebra for retaining a wiper rubber of a windscreen wiper blade, the vertebra defining an internal groove along its length to receive the head of the wiper rubber section, and an end-cap at the end of the vertebra, the end-cap being shaped to slide over the section of the vertebra and having an inwardly projecting tongue which locates as a snap-fit in a recess in the vertebra, and wherein the wall of the end-cap carrying the tongue is partially cut away from the rest of the end-cap to enable that wall to be prised away to release the tongue from the recess.

In normal usage, therefore, the end-cap will be held securely in place. However when there is a need to remove the end-cap, to replace the wiper rubber, the tongue on the end-cap can be lifted (such as by a fingernail) to allow the end-cap to be prised off.

In the preferred arrangement said wall of the end-cap is cut near the edge of two sides to leave a connecting flange on the remaining side, enabling the wall to flex with respect to the rest of the end-cap. It is preferred that an L-shaped cut should be formed so that the tongue flexes adjacent to one side wall of the end-cap.

The invention may be performed in various ways and a preferred embodiment thereof will now be described with reference to the accompanying drawings, in which:-
Figure 1 is a section through a vertebra and wiper rubber of a windscreen wiper blade assembly;
Figure 2 is an exploded view of a vertebra and end-cap structure of this invention;
Figure 3 is a vertical section through the end-cap shown in Figure 2.

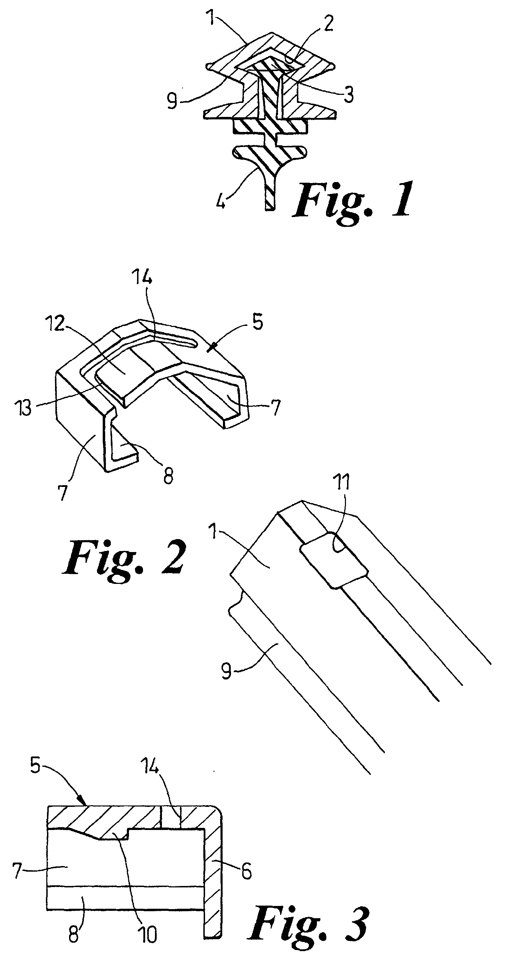

A standard harness assembly comprises a flexible vertebra 1 defining an internal groove 2 which receives the head 3 of a wiper rubber 4. As can be seen from Figure 2 an end-cap 5 can be slotted onto the end of the vertebra 1. The end cap (as shown in Figure 3) has a rear wall 6 which acts to prevent the wiper rubber 4 from sliding out of the vertebra 1. Side walls 7 of the end-cap have inturned flanges 8 which locate into grooves 9 in the sides of the vertebra 1. An internal tongue 10 of the end-cap 5 will locate as a snap-fit into an opening 11 cut into the top of the vertebra 1, so that the end-cap 5 does not slide off. As can be seen from Figure 2 the top wall 12 of the end-cap 5 is partially cut away by slots 13 and 14 adjacent to one side wall 7 and the end wall 6. This top wall portion 12 is then held only adjacent to the other side wall 7 and can flex upwardly. When it is desired to remove the end-cap 5 from the vertebra 1, then the free end of the top wall portion 12 can be prised upwardly to release the tongue 10 from the recess 11.

## Claims

1. A profiled vertebra for retaining a wiper rubber of a windscreen wiper blade, the vertebra defining an internal groove along its length to receive the head of the wiper rubber section, and an end-cap at the end of the vertebra, the end-cap being shaped to slide over the section of the vertebra and having an inwardly projecting tongue which locates as a snap-fit in a recess in the vertebra, and wherein the wall of the end-cap carrying the tongue is partially cut away from the rest of the end-cap to enable that wall to be prised away to release the tongue from the recess.

2. A vertebra according to claim 1, wherein said wall of the end-cap is cut near the edge of two sides to leave a connecting flange on the remaining side, enabling the wall to flex with respect to the rest of the end-cap.

3. A vertebra according to claim 2, wherein said cut is L-shaped cut so that the tongue flexes adjacent to one side wall of the end-cap.

4. A vertebra and substantially as herein described with reference to the accompanying drawings.

5. Any novel combination of features of a vertebra and substantially as herein described and/or illustrated in the accompanying drawings.
